# EUROPÄISCHE PATENTSCHRIFT

(11) **EP 2 830 790 B1**
(45) Veröffentlichungstag und Bekanntmachung des Hinweises auf die Patenterteilung: **13.06.2018**
(21) Anmeldenummer: 13711010.2
(22) Anmeldetag: 15.03.2013
(51) Int. Cl.: B21J 15/02, B21J 15/08, B21J 15/14, F16B 5/04, F16B 11/00, F16B 19/08

(54) **VERFAHREN ZUM FÜGEN VON WERKSTÜCKLAGEN**
METHOD FOR JOINING WORKPIECE LAYERS
PROCÉDÉ D'ASSEMBLAGE DE PIÈCES SUPERPOSÉES

(30) Priorität: 31.03.2012 DE 102012006631; 19.04.2012 DE 102012008798
(43) Veröffentlichungstag der Anmeldung: 04.02.2015
(73) Patentinhaber: Adient Luxembourg Holding S.à r.l., 1855 Luxembourg (LU)
(72) Erfinder: DANNHEISIG, Andreas, 48336 Sassenberg (DE); GALAN, Jesus, 40625 Düsseldorf (DE); GROSS, Bernd, 40764 Langenfeld (DE); KOEVER, Axel, 50859 Köln (DE)
(74) Vertreter: Liedhegener, Ralf
(86) Internationale Anmeldenummer: PCT/EP2013/055430
(87) Internationale Veröffentlichungsnummer: WO 2013/143887

(56) Entgegenhaltungen:
- EP-A1- 0 372 704
- WO-A1-93/10925
- DE-A1- 10 033 149
- DE-A1-102004 025 492
- DE-A1-102005 031 917
- DE-A1-102007 030 806
- JP-A- 2004 360 746
- JP-A- 2005 321 018
- US-A- 5 253 965
- US-A1- 2003 167 620
- US-A1- 2010 088 880

## Beschreibung

Die Erfindung betrifft ein Verfahren zum Fügen mindestens zweier Werkstücklagen durch Einbringen eines Verbindungselementes mit einer außen auf dem Verbindungselement aufgebrachten Beschichtung, wobei das Verbindungselement mittels einer Fügevorrichtung an einer Fügestelle eingebracht wird und die mindestens zwei Werkstücklagen miteinander verbindet, indem das Verbindungselement aus Richtung der ersten Werkstücklage mittels eines Stempels unter Aufbringung einer Stempelkraft zumindest durch die erste Werkstücklage, unter Bildung einer Schnittfläche in der ersten Werkstücklage oder vorbei an einer Schnittfläche der ersten Werkstücklage, durchgeführt, insbesondere durchgestanzt wird und in die zweite Werkstücklage wenigstens teilweise eindringt und das Verbindungselement mittels einer an der zweiten Werkstücklage anliegenden Matrize unter Aufbringung der Stempelkraft auf das Verbindungselement umgeformt wird, so dass es die mindestens zwei Werkstücklagen formschlüssig miteinander verbindet.

### Stand der Technik

Zum Fügen mindestens zweier Werkstücklagen ist beispielsweise das Stanznietverfahren allgemein bekannt. Dieses Verfahren dient zum unlösbaren kraft- und formschlüssigen Fügen der Werkstücklagen mit speziellen Stanznieten als Verbindungselementen, mit denen die Werkstücklagen ohne vorheriges Lochen in einem kombinierten Stanz- und Umformvorgang durchgestanzt und gefügt werden. Der Stanzniet dient dabei als Einweg-Schneidstempel und wird dabei auch selbst umgeformt. Die Werkstücklagen werden zunächst mittels eines Niederhalters über einer Matrize positioniert. Anschließend wird der Stanzniet über einen Stempel mit einer Kraft beaufschlagt und in die Fügeteile gepresst. Der Nietschaft durchschneidet dabei je nach Nietverfahren zumindest die obersten Werkstücklagen und wird dann in der Matrize aufgespreizt. Bei Verwendung eines Hohlniets geschieht dies insbesondere ohne die unterste Werkstücklage vollständig zu durchstoßen. Beim Stanznieten von faserverstärkten Materialen, wie beispielsweise glasfaser- oder kohlefaserverstärkten Kunststoffen, werden durch den Stanzniet die Fasern durchgeschnitten, und es kann in der Randzone der Schnittfläche zu einer Delaminierung von Fasern und Matrixwerkstoff kommen. Dies kann zu Rissen im Werkstück und einem vollständigen Versagen der Verbindungsstelle führen.

Aus der DE 10 2005 031 917 A1 ist ein gattungsgemäßes Fügeverfahren zum Fügen mindestens zweier plattenförmiger Werkstücke aus artgleichen und unterschiedlichen Materialien bekannt, bei der eine Stanznietverbindung mit einer Klebeverbindung kombiniert wird. Vor dem eigentlichen Fügevorgang wird ein Klebstoff in die Fügezone zwischen die Werkstücklagen eingebracht, der die Werkstücklagen zusätzlich miteinander verklebt. Während des eigentlichen Stanznietverfahrens fließt der Klebstoff aus der Fügezone radial nach außen, erreicht jedoch nicht die Schnittflächen und wirkt nicht gegen eine Delaminierung.

Die US 2010/0088880 A1 offenbart ein Verbindungselement, das innerhalb des Nietschaftes ein Klebemittel aufweist, das erst nach Beginn des Fügeverfahrens, nämlich während des Stanzvorgangs, durch Durchgänge des Nietschaftes zur äußeren Oberfläche des Nietschaftes gepresst wird. Vor Beginn des Fügeverfahrens ist das Verbindungselement außen nicht beschichtet.

Aus der JP 2004 360746 A ist ein Verfahren zum Fügen zweier Werkstücklagen mit einem Stanzniet bekannt. Aufgrund des Einbringens des Stanzniets in die Werkstücklagen können Risse und Spalte in den Werkstücklagen entstehen. Zur Vermeidung einer niedrigen Festigkeit der Nietverbindung und zum Schutz vor Korrosionsproblemen werden diese Risse und Spalte geschlossen. Der Stanzniet ist dazu mit einer Harzschicht beschichtet, die unter Temperatur aufschäumt und aushärtet. Das aufgeschäumte Harz schäumt die Risse und die Spalte aus.

Aus der gattungsgemäßen JP 2005 321018 A ist ein Stahlniet bekannt, mit dem Werkstücklagen aus von Stahl abweichenden Metallen vernietet werden können, ohne dass eine Kontaktkorrosion stattfindet. Dazu ist der Stahlniet mit einer Harzschicht bedeckt. Nach erfolgtem Nietprozess wird der Niet über einen Zeitraum von 5 bis 20 Minuten auf eine Temperatur von 140 bis 200 Grad Celsius erhitzt, wodurch der Harz schmilzt, in die Zwischenräume zwischen dem Stahlniet und den Metall-Werkstücklagen eindringt und dort eine elektrisch isolierende Schicht bildet.

### Aufgabe

Der Erfindung liegt die Aufgabe zu Grunde, ein Verfahren zum Fügen der eingangs genannten Art zu verbessern, insbesondere um ein Delaminieren von faserverstärkten Werkstücklagen im Bereich der Schnittflächen weitgehend oder vollständig zu vermeiden. Des Weiteren soll ein Verbindungselement und eine Fügevorrichtung zur Durchführung des erfindungsgemäßen Verfahrens zur Verfügung gestellt werden.

### Lösung

Diese Aufgabe wird erfindungsgemäß durch ein Verfahren mit den im Anspruch 1 genannten Verfahrensschritten gelöst. Vorteilhafte Ausgestaltungen, welche einzeln oder in Kombination miteinander eingesetzt werden können, sind Gegenstand der Unteransprüche.

Dadurch, dass das Verbindungselement soweit aufgeheizt wird, dass eine Beschichtung des Verbindungselementes schmilzt und die Schnittfläche in der ersten Werkstücklage benetzt, insbesondere vollständig verschließt und dass nach einem Abkühlprozess die wieder verfestigte Beschichtung an der Schnittfläche der ersten Werkstücklage haftet, wird die Schnittfläche durch die Beschichtung insbesondere vollständig verschlossen und dadurch bei Werkstücklagen aus faserverstärktem Kunststoff einer Delaminierung vorgebeugt.

Eine oder mehrere der Werkstücklagen können vorgelocht sein, so dass eine durch das Vorlochen entstandene Schnittfläche mittels der Beschichtung bedeckt wird. Die Schnittfläche kann jedoch auch während des erfindungsgemäßen Verfahrens durch das Verbindungselement selbst erzeugt werden. Dazu sind insbesondere durchstanzende Verbindungselemente geeignet.

Unter einem durchstanzenden Verbindungselement ist ein Verbindungselement zu verstehen, das eine oder mehrere Werkstücklagen während des Fügevorgangs durchstanzen kann, d.h. ein Stanzniet. Ein durchstanzendes Verbindungselement aber auch problemlos durch ein zuvor eingebrachtes Vorloch in einer oder in mehreren der Werkstücklagen durchgeführt werden, so dass das Verbindungselement selbst kein Loch in die Werkstücklagen stanzt, sondern im Wesentlichen nur der Verbindung der Werkstücklagen dient. Vorteilhafterweise ist zumindest eine der mindestens zwei Werkstücklagen, insbesondere die erste Werkstücklage, vor Beginn des Verfahrens im Bereich der Fügestelle eine durchgehend geschlossene Fläche ohne Vorloch. Somit wird der Bearbeitungsaufwand reduziert.

Besonders geeignet sind Stanzniete, insbesondere Halbhohlstanzniete als durchstanzende Verbindungselemente. Die unterste Werkstücklage (bei zwei Werkstücklagen somit die zweite Werkstücklage) wird vorzugsweise durch den Stanzniet nicht oder nicht vollständig durchgestanzt, so dass eine dichte Fügestelle entsteht. Folglich sind unter dem Oberbegriff "durchstanzendes Verbindungselement" auch bekannte Verbindungselemente zu verstehen, die nicht sämtliche Werkstücklagen vollständig durchstanzen, sondern eine Werkstücklage, insbesondere die zweite von zwei Werkstücklagen, nicht oder nur teilweise durchgestanzt wird. Das Verfahren ist auch unter Verwendung von Vollstanznieten vorteilhaft, insbesondere dann, wenn sämtliche Werkstücklagen vollständig durchstanzt werden.

Indem das Verbindungselement ein Durchgangsloch oder ein Gewindeloch aufweist, können weitere Funktionen in die Fügestelle integriert oder an der Fügestelle angebunden werden.

Besonders vorteilhaft ist das Verfahren zur Erzeugung von Composits, deren erste Werkstücklage aus einem faserverstärkten Kunststoff besteht, und deren zweite Werkstücklage aus einem metallischem Werkstoff, insbesondere einer Stahllegierung, Aluminiumlegierung oder Magnesiumlegierung besteht.

Die Beschichtung des Verbindungselements weist bevorzugt einen Kleber oder Kunststoff, insbesondere einen Polymerwerkstoff, auf. Für Stanzniete ist es ausreichend, wenn deren Nietschaft beschichtet ist.

Je nach Geometrie und Werkstoff der zu fügenden Werkstücklagen kann es vorteilhaft sein, in einem vorgeschalteten Verfahrensschritt eine oder sämtliche Werkstücklagen oder den Stanzniet oder die Fügevorrichtung vorzuwärmen.

Besonders geeignet sind Fügevorrichtungen, die als Werkzeugelemente eine Matrize, einen Niederhalter und einen Stempel umfassen, von denen mindestens ein Werkzeugelement beheizbar ist. Vorzugsweise ist der Stempel beheizbar.

Eine thermische Beschädigung der Werkstücklagen durch zu hohe Temperaturen wird vermieden, indem die Fügevorrichtung eine Temperaturregelungsvorrichtung umfasst, mittels derer die Temperatur des Werkzeugelementes, insbesondere des Stempels, eingestellt und auf einem konstanten Niveau gehalten werden kann.

### Figuren und Ausführungsformen der Erfindung

Im Folgenden ist die Erfindung anhand eines in den Zeichnungen dargestellten vorteilhaften Ausführungsbeispiels näher erläutert. Die Erfindung ist jedoch nicht auf dieses Ausführungsbeispiele beschränkt. Es zeigen:
Fig. 1 zwei zwischen Niederhalter und Matrize positionierte Werkstücklagen vordem Einbringen des Stanzniets,
Fig. 2 die Fügestelle unmittelbar nach dem Einbringen des Stanzniets in die Fügestelle,
Fig. 3 das anschließende Aufheizen des Stanzniets und Aufschmelzen der Nietbeschichtung,
Fig. 4 das anschließende Abkühlen der Fügestelle mit an den Schnittflächen anhaftender Beschichtung und
Fig. 5 die fertiggestellte Fügestelle unmittelbar vor der Entfernung aus dem Fügevorrichtung.

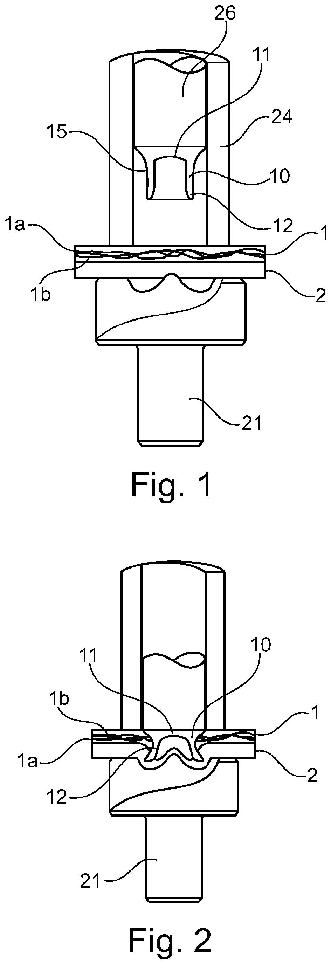

Figur 1 zeigt eine erste Werkstücklage 1 und eine mit dieser zu fügende zweite Werkstofflage 2, die in einer Fügevorrichtung eingebracht und positioniert sind. Die an sich bekannte Fügevorrichtung umfasst eine Matrize 21, einen Nieder-halter 24 und einen Stempel 26.

Die erste Werkstücklage 1 besteht aus einem faserverstärkten Werkstoff, in dessen Matrix 1a eine Vielzahl von Fasern 1b zur Verstärkung des Matrixwerkstoffes 1a eingebracht sind. Bei diesem faserverstärkten Werkstoff handelt es sich vorliegend um einen glas- oder kohlefaserverstärkten Kunststoff mit ausgerichteten Langfasern. Es ist jedoch grundsätzlich der Einsatz aller bekannten faserverstärkten Werkstoffe für die erste Werkstücklage 1 möglich. Die zweite Werkstofflage 2 besteht vorliegend aus einem metallischem Werkstoff, insbesondere aus einer Stahllegierung, Aluminiumlegierung oder Magnesiumlegierung. Es ist jedoch grundsätzlich auch der Einsatz anderer bekannter nicht faserverstärkter oder faserverstärkten Werkstoffe für die zweite Werkstücklage 2 möglich.

Die zweite Werkstofflage 2 liegt auf der Matrize 21 auf. Auf der zweiten Werkstofflage 2 liegt flächig die erste Werkstofflage 1 auf. Die beiden Werkstofflagen 1, 2 werden mittels des Niederhalters 24 relativ zueinander in der Fügevorrichtung fixiert.

Ein Verbindungselement in Form eines Stanznietes 10 ist in der Fügevorrichtung oberhalb der Fügestelle positioniert. Der Stanzniet 10 ist als Halbhohlstanzniet ausgeführt, könnte in abgewandelter Ausführung jedoch auch ein Vollniet sein. Der Stanzniet 1 umfasst einen Nietkopf 11 und einen Nietschaft 12. Der Nietschaft 12 ist mit einer Beschichtung 15 versehen, die bevorzugt aus einem Polymer besteht, der als Kleber oder Kunststoff auf den Nietschaft 12 aufgebracht ist.

In Figur 2 ist die Fügestelle unmittelbar nach dem kombinierten Stanz- und Umformvorgang dargestellt, bei dem der mittels des Stempels 26 kraftbeaufschlagte Stanzniet 10 durch die erste Werkstücklage 1 durchgestanzt und in die zweite Werkstücklage 2 eingebracht ist. Der Stanzniet 10 dient dabei als Einweg-Schneidstempel und wird dabei auch selbst umgeformt, indem er durch die von der Matrize 21 aufgebrachte Gegenkraft an einer Ausformung in der Matrize 21 aufgespreizt wird. Vorliegend geschieht dies insbesondere ohne die zweite Werkstücklage 2 vollständig zu durchstoßen. In der ersten Werkstücklage 1 entsteht aufgrund des Durchstanzens eine umlaufende, zylinderförmige Schnittfläche. Der Matrixwerkstoff der Matrix 1a und die Fasern 1b sind im Bereich der Schnittfläche durchgeschnitten. In der Randzone der Schnittfläche liegen die Faserenden der Fasern 1b offen und sind nicht durch Matrixwerkstoff der Matrix 1a bedeckt und geschützt. Dadurch entsteht in der Schnittfläche eine Delaminierung von Fasern 1b und Matrixwerkstoff 1a.

In einer Abwandlung des Ausführungsbeispiels ist die erste Werkstücklage 1 bereits vor Beginn des erfindungsgemäßen Verfahrens vorgelocht, so dass die Schnittfläche in der ersten Werkstücklage nicht oder nur teilweise durch den Stanzniet 10 erzeugt wird.

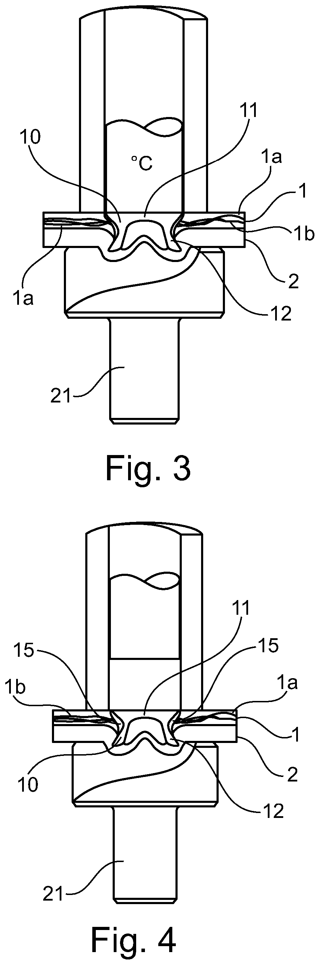

In einem nächsten, in der Figur 3 dargestellten Verfahrensschritt wird die Fügestelle durch den Stempel 26 aufgeheizt, indem der Stempel 26 beheizbar ist und beheizt wird, insbesondere elektrisch oder induktiv. In einer alternativen Fügevorrichtung kann auch die Matrize 21 und/oder der Niederhalter 24 beheizbar sein. Die Beschichtung 15 des Nietschafts 12 des Stanzniets 10 schmilzt aufgrund der eingebrachten Wärme und benetzt die Schnittfläche in der ersten Werkstücklage 1, so dass die Beschichtung die Schnittfläche insbesondere vollständig verschließt.

In einem anschließenden Schritt, den Figur 4 zeigt, wird die Fügestelle abgekühlt, indem die Wärmeeinbringung in den Stempel 26 abgeschaltet wird und insbesondere zusätzlich aktiv gekühlt wird. Dazu ist der Stempel 26 bereits von der Fügestelle entfernt. Die Beschichtung 15 verfestigt sich nun an der Schnittfläche der ersten Werkstücklage 1 und bedeckt somit die Faserenden der Fasern 1b, die dadurch vor einer Delaminierung geschützt sind.

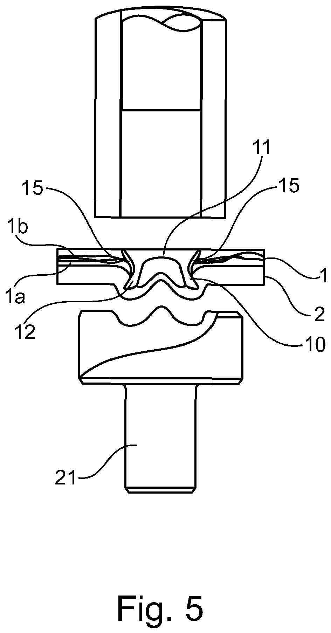

Die miteinander gefügten Werkstücklagen 1 und 2 werden in einem letzten Verfahrensschritt aus der Fügevorrichtung entnommen (Figur 5).

### Bezugszeichenliste

- 1: erste Werkstücklage
- 1a: Matrix
- 1b: Faser
- 2: zweite Werkstücklage
- 10: Verbindungselement, Stanzniet
- 11: Nietkopf
- 12: Nietschaft
- 15: Beschichtung
- 21: Matrize
- 24: Niederhalter
- 26: Stempel

## Patentansprüche

1. Verfahren zum Fügen mindestens zweier Werkstücklagen (1, 2) durch Einbringen eines Stanzniets (10) mit einer außen auf dem Stanzniet (10) aufgebrachten Beschichtung (15), wobei der Stanzniet (10) mittels einer Fügevorrichtung (21, 24, 26) an einer Fügestelle in die Werkstücklagen (1, 2) eingebracht wird und die mindestens zwei Werkstücklagen (1, 2) miteinander verbindet, indem
a. der Stanzniet (10) aus Richtung der ersten Werkstücklage (1) mittels eines Stempels (26) unter Aufbringung einer Stempelkraft zumindest durch die erste Werkstücklage (1), unter Bildung einer Schnittfläche in der ersten Werkstücklage (1) oder vorbei an einer Schnittfläche der ersten Werkstücklage (1), durchgeführt, insbesondere durchgestanzt, wird und in die zweite Werkstücklage wenigstens teilweise eindringt,
b. der Stanzniet (10) mittels einer an der zweiten Werkstücklage (2) anliegenden Matrize (21) unter Aufbringung der Stempelkraft auf den Stanzniet (10) umgeformt wird, so dass es die mindestens zwei Werkstücklagen (1, 2) formschlüssig miteinander verbindet,
c. der Stanzniet (10) während des Verfahrens soweit aufgeheizt wird, dass die außen auf dem Stanzniet(10) aufgebrachte Beschichtung (15) schmilzt und die Schnittfläche in der ersten Werkstücklage (1) benetzt, und
d. nach einem Abkühlprozess die wieder verfestigte Beschichtung (15) an der Schnittfläche der ersten Werkstücklage (1) haftet,
**dadurch gekennzeichnet, dass** zumindest eine der zumindest zwei Werkstücklagen (1, 2) aus faserverstärktem Kunststoff besteht.

2. Verfahren nach Anspruch 1, **dadurch gekennzeichnet, dass** der Stanzniet(10) soweit aufgeheizt wird, dass die Beschichtung (15) schmilzt und die Schnittfläche in der ersten Werkstücklage (1) vollständig verschließt.

3. Verfahren nach Anspruch 1 oder 2, **dadurch gekennzeichnet, dass** zumindest eine der mindestens zwei Werkstücklagen (1, 2) vor Beginn des Verfahrens im Bereich der Fügestelle eine durchgehend geschlossene Fläche ohne Vorloch aufweist.

4. Verfahren nach Anspruch 3, **dadurch gekennzeichnet, dass** der durchstanzende Stanzniet (10) ein Halbhohlstanzniet oder ein Vollstanzniet ist.

5. Verfahren nach einem der vorstehenden Ansprüche, **dadurch gekennzeichnet, dass** der Stanzniet (10) ein Durchgangsloch oder ein Gewindeloch aufweist.

6. Verfahren nach einem der vorstehenden Ansprüche, **dadurch gekennzeichnet, dass** zumindest eine der mindestens zweier Werkstücklagen (1, 2) aus metallischem Werkstoff, insbesondere einer Stahllegierung, Aluminiumlegierung oder Magnesiumlegierung besteht.

7. Verfahren nach einem der vorstehenden Ansprüche, **dadurch gekennzeichnet, dass** die Beschichtung (15) einen Kleber oder Kunststoff, insbesondere einen Polymerwerkstoff umfasst.

8. Verfahren nach Anspruch 7, **dadurch gekennzeichnet, dass** die Beschichtung (15) aus einem thermoplastischen Kunststoff besteht.

## Claims

1. Method for joining at least two workpiece layers (1, 2) by introducing a punch rivet (10) having a coating (15) which is applied to the outside of the punch rivet (10), wherein the punch rivet (10) is introduced into the workpiece layers (1, 2) by means of a joining device (21, 24, 26) at a joint and interconnects the at least two workpiece layers (1, 2), in that
a. by means of a stamp (26), the punch rivet (10), from the direction of the first workpiece layer (1) and under exertion of a stamping force, and while forming a cutting face in the first workpiece layer (1) or passing beside a cutting face of the first workpiece layer (1), is guided through, in particular punched through, at least the first workpiece layer (1) and penetrates, at least in part, the second workpiece layer,
b. the punch rivet (10), by means of a die plate (21) bearing on the second workpiece layer (2), is deformed under exertion of the stamping force onto the punch rivet (10), such that said connecting element (10), in a form-fitting manner, interconnects the at least two workpiece layers (1, 2),
c. the punch rivet (10), during the process, is heated to such an extent that the coating (15) which has been applied to the outside of the punch rivet (10) melts and wets the cutting face in the first workpiece layer (1), and
d. the re-solidified coating (15), after a cooling process, adheres to the cutting face of the first workpiece layer (1), **characterized in that** at least one of the at least two workpiece layers (1, 2) is composed of fiber-reinforced plastic.

2. Method according to Claim 1, **characterized in that** the punch rivet (10) is heated to such an extent that the coating (15) melts and completely seals the cutting face in the first workpiece layer (1).

3. Method according to Claim 1 or 2, **characterized in that**, prior to commencing the method, at least one of the at least two workpiece layers (1, 2), in the region of the joint, has a continuously closed surface without a prepunch.

4. Method according to Claim 3, **characterized in that** the through-punching punch rivet (10) is a semi-hollow punch rivet or a solid punch rivet.

5. Method according to one of the preceding claims, **characterized in that** the punch rivet (10) has a through hole or a tapped hole.

6. Method according to one of the preceding claims, **characterized in that** at least one of the at least two workpiece layers (1, 2) is composed of a metallic material, in particular a ferrous alloy, an aluminum alloy, or a magnesium alloy.

7. Method according to one of the preceding claims, **characterized in that** the coating (15) comprises an adhesive or a plastic, in particular a polymer material.

8. Method according to Claim 7, **characterized in that** the coating (15) is composed of a thermoplastic.

## Revendications

1. Procédé d'assemblage d'au moins deux couches de pièces (1, 2), par introduction d'un rivet auto-poinçonneur (10) avec un revêtement (15) appliqué à l'extérieur sur le rivet auto-poinçonneur (10), le rivet auto-poinçonneur (10) étant introduit au moyen d'un dispositif d'assemblage (21, 24, 26) au niveau d'une zone d'assemblage dans les couches de pièces (1, 2) et reliant les au moins deux couches de pièces (1, 2) l'une avec l'autre, par le fait que
a. le rivet auto-poinçonneur (10) est guidé à partir de la direction de la première couche de pièces (1) au moyen d'un poinçon (26) en appliquant une force de poinçonnage au moins à travers la première couche de pièces (1), en formant une surface de coupe dans la première couche de pièces (1) ou devant une surface de coupe de la première couche de pièces (1), en particulier en perforant à travers celle-ci, et pénètre au moins en partie dans la deuxième couche de pièces,
b. le rivet auto-poinçonneur (10) est déformé au moyen d'une matrice (21) s'appliquant contre la deuxième couche de pièces (2) en appliquant la force de poinçonnage sur le rivet auto-poinçonneur (10), de telle sorte qu'il relie l'une à l'autre par engagement par correspondance de formes les au moins deux couches de pièces (1, 2),
c. le rivet auto-poinçonneur (10) est chauffé pendant l'opération dans une mesure telle que le revêtement (15) appliqué sur le rivet auto-poinçonneur (10) fonde et mouille la surface de coupe dans la première couche de pièces (1), et
d. après un processus de refroidissement, le revêtement à nouveau solidifié (15) adhère à la surface de coupe de la première couche de pièces (1),
**caractérisé en ce qu'**au moins l'une des au moins deux couches de pièces (1, 2) se compose d'un plastique renforcé par des fibres.

2. Procédé selon la revendication 1, **caractérisé en ce que** le rivet auto-poinçonneur (10) est chauffé dans une mesure telle que le revêtement (15) fonde et ferme entièrement la surface de coupe dans la première couche de pièces (1).

3. Procédé selon la revendication 1 ou 2, **caractérisé en ce qu'**au moins l'une des au moins deux couches de pièces (1, 2) avant le début de l'opération, présente dans la zone de l'assemblage, une surface entièrement fermée sans préperçage.

4. Procédé selon la revendication 3, **caractérisé en ce que** le rivet auto-poinçonneur (10) perforant est un rivet auto-poinçonneur semi-tubulaire ou un rivet auto-poinçonneur plein.

5. Procédé selon l'une quelconque des revendications précédentes, **caractérisé en ce que** le rivet auto-poinçonneur (10) présente un trou traversant ou un trou fileté.

6. Procédé selon l'une quelconque des revendications précédentes, **caractérisé en ce qu'**au moins l'une des au moins deux couches de pièces (1, 2) se compose d'un matériau métallique, en particulier d'un alliage d'acier, d'un alliage d'aluminium ou d'un alliage de magnésium.

7. Procédé selon l'une quelconque des revendications précédentes, **caractérisé en ce que** le revêtement (15) comprend une colle ou un plastique, en particulier un matériau polymère.

8. Procédé selon la revendication 7, **caractérisé en ce que** le revêtement (15) se compose d'un plastique thermoplastique.
